# FASCICULE DE BREVET EUROPEEN

(11) **EP 3 562 714 B1**
(45) Date de publication et mention de la délivrance du brevet: **28.10.2020**
(21) Numéro de dépôt: 17817005.6
(22) Date de dépôt: 08.12.2017
(51) Int. Cl.: B60R 19/34, F16F 7/12

(54) **SYSTÈME D'ABSORPTION DE CHOC POUR VÉHICULE AUTOMOBILE**
STOSSDÄMPFUNGSSYSTEM FÜR EIN KRAFTFAHRZEUG
IMPACT ABSORBING SYSTEM FOR MOTOR VEHICLE

(30) Priorité: 29.12.2016 FR 1663534
(43) Date de publication de la demande: 06.11.2019
(73) Titulaire: Compagnie Plastic Omnium, 69007 Lyon (FR)
(72) Inventeur: GINJA, Stéphane, 01500 Amberieu En Bugey (FR); ROUSSEL, Thierry, 52500 Montesson (FR); CHENE, Anthony, 01640 Jujurieux (FR)
(74) Mandataire: LLR
(86) Numéro de dépôt international: PCT/FR2017/053455
(87) Numéro de publication internationale: WO 2018/122482

(56) Documents cités:
- WO-A1-2013/104635
- FR-A1- 3 009 358
- JP-A- 2015 067 006
- JP-A- 2017 047 839
- US-A1- 2015 069 773

## Description

La présente invention concerne le domaine des pare-chocs, plus particulièrement des systèmes d'absorption d'énergie du type absorbeurs de choc pour véhicule automobile.

On connaît dans l'état de la technique, comme les documents US2015/069773A1 qui montre le préambule de la revendication 1, et WO2013/104635A1, des absorbeurs pour véhicule destinés à être placé entre une poutre de choc transversale et des longerons qui relient l'ensemble au corps du véhicule. Ils peuvent être présents en avant et/ou en arrière du véhicule en s'étendant dans la direction longitudinale. De tels absorbeurs permettent d'absorber l'énergie en cas d'impact de manière à limiter la déformation d'autres composants et les coûts de réparations.

De nos jours, les constructeurs automobiles cherchent à réduire de plus en plus la consommation en énergie des véhicules automobiles, notamment en diminuant le poids de celles-ci. Dans cette optique, ils cherchent à réduire le taux d'encombrement des pare-chocs, en particulier celui de la poutre et des absorbeurs dans la direction longitudinale. A l'avant du véhicule, une réduction de 50 mm de la distance entre l'avant de la poutre et l'arrière des absorbeurs, induit un allégement du véhicule d'environ 5 kg. Cette réduction de distance, induit une réduction du porte-à-faux véhicule, ce qui permet aussi des libertés de style de véhicules, notamment par des pare choc plus verticaux et des capots plus courts.

Cependant, la réduction de cette distance (entre l'avant de la poutre et l'arrière des absorbeurs), et donc du porte-à-faux, est limitée par les normes de sécurité qui exigent une résistance satisfaisante du pare-choc et des pièces environnantes. Une façon de réduire le porte-à-faux est d'augmenter la longueur efficace de l'absorbeur, c'est à dire la distance sur laquelle l'absorbeur se déforme avant d'atteindre son incompressibilité caractérisée en une forte montée en effort. Dans le cadre de cette invention, la compressibilité s'entend de la faculté d'un corps à beaucoup s'écraser, c'est-à-dire à laisser un résidu incompressible le plus faible possible, pour une quantité d'énergie absorbée équivalente (donnée par le cahier des charges).

A titre d'exemple, un absorbeur métallique peut se comprimer sur environ 75% et possède une incompressibilité d'environ 25%. On cherche donc à augmenter la compressibilité des absorbeurs pour qu'ils puissent absorber le plus d'énergie possible en cas d'impact dans un encombrement axial réduit. Cet encombrement axial est donc le total de la course d'écrasement (pendant laquelle l'énergie est absorbée), et l'incompressible restant à la fin. Autrement dit, on cherche à réduire la partie incompressible des absorbeurs qui ne participe pas à l'absorption d'énergie.

On connaît un absorbeur d'une poutre choc composé de matière composite, dans lequel l'absorbeur est composé de deux demies coques intégrées chacune dans un élément de liaison. Le mode de liaison de ces demies coques implique un mode de déformation de l'absorbeur de type bottelage favorisé par la liaison discontinue des deux demi coques (vis, rivets, ...) et par un amorçage qui s'effectue entre ces points de liaison (absorption d'énergie par déformation des vagues successives des demies coques). Le mode de « bottelage » (connu des spécialistes) est moins efficace que le mode de délaminage en termes d'absorption d'énergie car il crée un résidu incompressible après choc (environ 25%). Avec un mode de délaminage, on peut espérer un résidu incompressible d'environ 5%. Cette réduction de l'incompressible induit une augmentation de la longueur efficace de l'absorbeur et donc un potentiel d'absorption d'énergie plus important pour un tarage en effort identique.

Un amorçage qui n'est pas effectué à l'avant de l'absorbeur n'est pas optimum pour l'absorption d'énergie.

En complément, ces éléments de liaison étant par définition rigides, ils induisent des zones non compressibles autour d'eux augmentant le résidu incompressible après choc. La multiplication de ces liaisons, amplifie ce phénomène.

On connait également des systèmes d'absorption d'énergie basés sur la compression axiale d'un tube composite. Classiquement ce tube est composé d'une résine constituant la matrice du composite et des fibres.

Pour favoriser le rendement énergétique, on utilise des fibres continues disposées par empilement dans l'épaisseur du tube. L'empilement peut être constitué de un ou plusieurs renforts, orientés de façon unidirectionnelle (fibres appelées UD) ou selon différentes orientations (par exemple 0°/+45°/-45°/0°).

On connait notamment comme fibres continues des UD, des renforts bi-axiaux cousus, des renforts tissés, des mats qui sont notamment utilisés dans le procédé de pultrusion. On connait aussi le renforcement par des bandes (ou tape) orientées sensiblement à +/-45 ° tel que décrit dans le brevet US6601886B1.

Le mode préconisé pour la déformation axiale d'un tel tube composite durant la phase de compression sous un effort (choc) est la délamination. Lors d'une telle délamination, les renforts fibrés se cisaillent dans leur épaisseur sur la longueur du tube (toute).

En particulier, on connaît le brevet US4336868A qui décrit des procédés de fabrication d'un tube composite ainsi que la performance des matrices et des renforts fibrés en termes de capacité à absorber l'énergie (énergie d'absorption spécifique). Dans ce document est notamment illustré le mode de délamination du tube sous un effort de compression axiale.

Classiquement, la résine est réduite en poussière et les différentes couches de renforts sont délaminées dans la direction de l'impact (donc essentiellement « axiale ») et absorbent ainsi de l'énergie.

On connait aussi les modes d'amorçage pour générer la délamination par compression d'un tube composite qui consistent à réaliser localement sur le tube une faiblesse pour initier sa déformation. Classiquement, on utilise comme zone d'amorçage une discontinuité de forme comme une entaille ou un chanfrein situé à l'une des extrémités du tube. Cette discontinuité sera appelée l'amorce.

L'invention a pour but de remédier à ces inconvénients en fournissant un système d'absorption de choc à encombrement réduit, assurant une bonne résistance au choc du véhicule. Ce système d'absorption possède un résidu incompressible minimal tout en ayant une efficacité énergétique maximale dans le but de réduire le porte-à-faux du véhicule.

Ainsi, l'objet de l'invention concerne un système d'absorption de choc pour véhicule automobile selon la revendication 1.

On entend par « délaminage » la propriété d'un corps à se cisailler dans son épaisseur longitudinalement. Le délaminage de l'élément absorbeur conduit à une destruction irréversible d'au moins une grande partie de l'élément absorbeur de sorte qu'il ne soit plus d'un seul tenant. De cette manière, la compressibilité de l'élément absorbeur est augmentée de manière conséquente. La longueur nécessaire du système d'absorption de choc est alors réduite, contribuant à une réduction du porte-à-faux et un allègement considérable du véhicule. Un tel élément absorbeur peut atteindre une compressibilité de plus de 90% (correspondant à un incompressible inférieur à 10%) comparé à un absorbeur aluminium ayant une compressibilité d'environ 75%.

La présence de l'élément de liaison permet d'assurer le maintien, la rétention, de la poutre au longeron, en particulier après la désintégration d'au moins une partie de l'élément absorbeur après un impact. Il ne participe pas ou très peu (moins de 10%) à l'absorption d'énergie et son épaisseur après un choc (appelée son incompressible) est plus faible que celle de l'élément absorbeur de sorte que l'élément absorbeur peut se comprimer jusqu'à sa compressibilité maximale sans être influencé par l'élément de liaison. La présence d'une zone de faiblesse mécanique programmée permet à l'élément de liaison d'initier le mode de compression de l'élément absorbeur en cas de choc, par exemple en se pliant au niveau de la zone de faiblesse mécanique programmée, et de suivre le mouvement de compression de l'élément absorbeur.

On entend par « zone de faiblesse mécanique programmée » une zone où la résistance mécanique du matériau est affaiblie de manière à initier et orienter le pliage de la pièce mécanique lorsque celle-ci subit un effort.

L'absorbeur de l'invention peut comporter en outre les caractéristiques suivantes prises seules ou combinées entre elles :
- l'élément absorbeur est apte à se désintégrer par délaminage ;
- l'élément absorbeur est positionné à l'intérieur de l'élément de liaison, la zone de faiblesse mécanique programmée étant prévue de sorte que la paroi de l'élément de liaison se plie, par exemple vers l'extérieur par rapport à l'élément absorbeur ; l'ensemble formé par l'élément absorbeur et l'élément de liaison est donc compact, favorable à l'économie d'espace ;
- la zone de faiblesse mécanique programmée comporte une pré-pliure, une fente ou une réduction d'épaisseur ;
- l'élément absorbeur est un corps creux, de préférence un tube ayant une section choisie parmi la liste suivante : circulaire, rectangulaire, conique, hexagonale, évolutive ;
- l'élément absorbeur n'est pas constitué d'un assemblage de différentes pièces ;
- la matrice est un matériau thermoplastique, de préférence choisi parmi les matériaux suivants : polyamide, polypropylène, polyuréthane ;
- la matrice est un matériau thermodurcissable, de préférence choisi parmi les matériaux suivants : époxy, polyester, vinylester ;
- les éléments de renfort sont des fibres continues, de préférence à base d'un matériau choisi seul ou en combinaison parmi les matériaux suivants : carbone, verre, aramide ;
- les éléments de renforts sont bi-axiaux (tissus, NCF, mat) ;
- les éléments de renforts continus sont réalisés par combinaison et empilement de renforts unidirectionnels et bi-axiaux ou bien de plusieurs renforts-bi-axiaux ;
- les éléments de renforts continus sont triaxiaux : chaussette 3D réalisée par le procédé de braiding ou bien assemblage de renforts bi-axiaux dans des plans différents ;
- l'élément de liaison a un taux d'incompressibilité de moins de 5% après un impact ; en se pliant suivant la zone de faiblesse mécanique programmée, l'élément de liaison permet en outre de renforcer la résistance au choc de la poutre dans la direction longitudinale.

L'invention concerne également un ensemble selon la revendication 13 d'une poutre de choc, d'un longeron et d'au moins un système d'absorption de choc selon l'invention, le système d'absorption de choc étant fixé respectivement à la poutre et au longeron par des platines de fixation. Avantageusement, le système d'absorption de choc est emmanché dans les platines hors zone de compression, de façon à ne pas générer d'incompressible entre les deux platines.

D'après la revendication 18, l'invention concerne également un procédé d'assemblage d'un ensemble selon l'invention comprenant les étapes suivantes :
- monter sur l'élément de liaison la platine de fixation du système d'absorption de choc sur la poutre ;
- disposer l'élément absorbeur à l'intérieur de l'élément de liaison ;
- monter sur l'élément de liaison la platine de fixation du système d'absorption de choc sur le longeron ;
- fixer le longeron sur le système d'absorption de choc ; et
- fixer le système d'absorption de choc sur la poutre.

L'invention concerne également une poutre de choc, selon la revendication 15, comportant au moins un système d'absorption de choc selon l'invention.

L'invention concerne également un module avant de véhicule automobile, selon la revendication 16, comportant au moins système d'absorption de choc selon l'invention.

L'invention concerne également un véhicule automobile, selon la revendication 17, comportant au moins un système d'absorption de choc selon l'invention.

L'invention sera mieux comprise à la lecture des figures annexées, qui sont fournies à titre d'exemples et ne présentent aucun caractère limitatif, dans lesquelles :
- les figures 1A et 1B illustrent un système d'absorption de choc selon un mode de réalisation de l'invention ; la figure 1A illustre la partie destinée à être fixée sur la poutre, et la figure 1B illustre la partie destinée à être fixée sur le longeron ;
- la figure 2 illustre un ensemble d'une poutre, de longerons et d'un système d'absorption de choc de la figure 1 ; et
- la figure 3 illustre différentes étapes d'assemblages d'un ensemble de la figure 2.

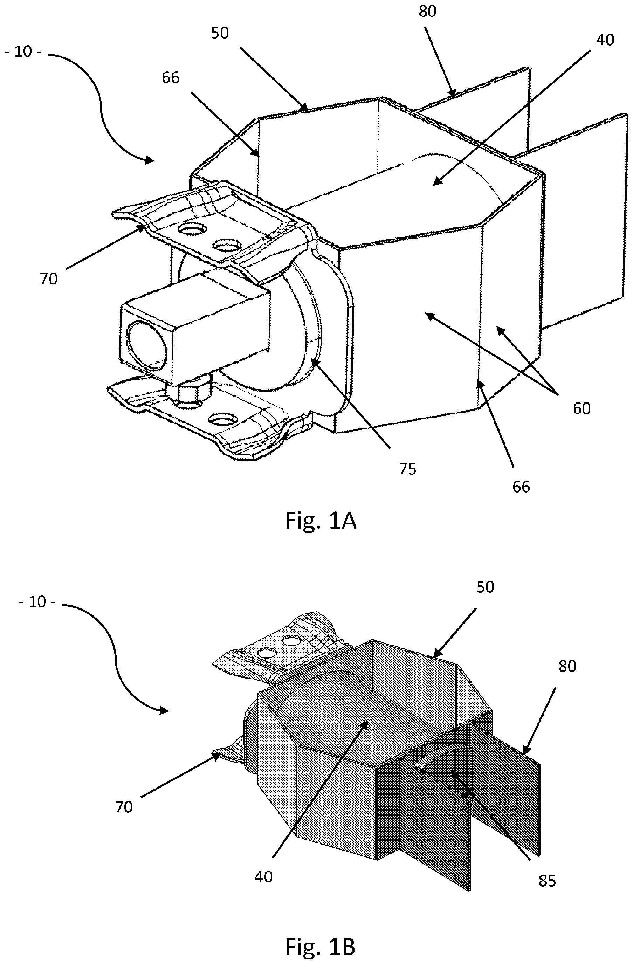

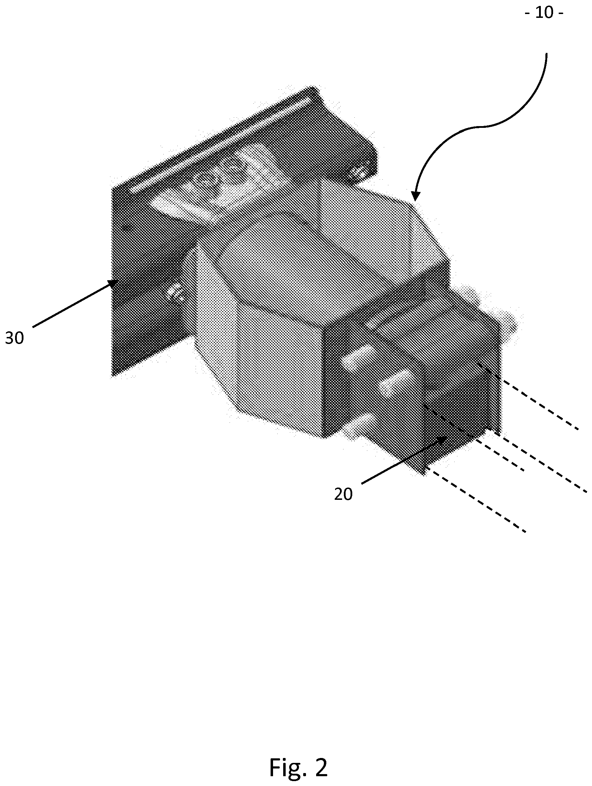

On se réfère maintenant aux figures 1A, 1B et 2 qui illustrent un exemple d'un système d'absorption de choc 10 pour véhicule automobile selon l'invention. Ce système 10 est destiné à être intercalé entre un longeron 20 et une poutre de choc transversale 30. Il comprend :
- un élément absorbeur 40 apte à se désintégrer de manière irréversible au moins partiellement en réaction à un choc, par exemple par délaminage ;
- un élément de liaison 50, destinée à être lié au longeron 20 et à la poutre de choc 30, comprenant au moins une paroi 60 ayant une extrémité destinée à être fixée à la poutre 30 et une autre extrémité destinée à être fixée au longeron 20, la paroi 60 comportant une zone 66 de faiblesse mécanique programmée permettant à la paroi 60 de se plier en cas de choc.

Selon un mode de réalisation, l'absorbeur de poutre choc est configuré pour que l'amorce soit du côté du barreau, de façon à ce que l'absorbeur se comprime sensiblement longitudinalement du barreau vers les longerons (direction X du repère véhicule). L'amorce est donc située de préférence vers l'avant du tube, encore mieux à son extrémité pour que le délaminage se produise de l'avant vers l'arrière.

### L'élément absorbeur 40

Selon un mode de réalisation, l'élément absorbeur 40 est un corps creux, de préférence un tube ayant une section choisie parmi la liste suivante : circulaire, rectangulaire, conique, hexagonale, évolutive.

Avantageusement, l'élément absorbeur 40 est réalisé d'un seul tenant, c'est-à-dire que sa fabrication ne résulte pas de l'assemblage de différentes pièces. Il peut par exemple être fabriqué par moulage de matière composite, notamment par pultrusion réactive ou par extrusion.

Selon l'invention, l'élément absorbeur 40 comprend au moins une couche de matériau composite ayant une matrice en matière plastique et des éléments de renfort.

La matrice en matière plastique est par exemple un matériau thermoplastique, de préférence choisi seul ou en combinaison parmi les matériaux suivants : un polyamide, un polypropylène, un polyuréthane.

La matrice en matière plastique peut alternativement être un matériau thermodurcissable, de préférence choisi seul ou en combinaison parmi les matériaux suivants : un époxy, un polyester, un vinylester.

Les éléments de renfort peuvent être des fibres continues, de préférence à base d'un matériau choisi seul ou en combinaison parmi les matériaux suivants : carbone, verre, aramide.

Les éléments de renforts sont des fibres unidirectionnelles orientées dans une direction non parallèle à une direction longitudinale du véhicule.

De façon avantageuse, l'élément absorbeur 40 comporte des nervures 45 internes.

Selon un exemple illustré sur les figures 1A et 1B, l'élément absorbeur 40 est avantageusement constitué d'un tube composite à renforts continus, continument lié à l'avant au barreau de la poutre de choc 30 et à l'arrière au longeron 20 ou à la platine du longeron 20.

L'élément absorbeur 40 comporte, à son extrémité destinée à être positionnée du côté de la poutre 30, une amorce qui initie le mode de délaminage en compression de l'élément absorbeur 40 de l'avant vers l'arrière (dans le sens de l'impact), et qui se déforme selon un mode de délamination. Ce tube a la capacité de se délaminer sur sensiblement toute sa longueur.

Selon un mode de réalisation, représenté sur les figures 1A à 3, l'élément absorbeur 40 est positionné à l'intérieur de l'élément de liaison 50, la zone 66 de faiblesse mécanique programmée étant prévue de sorte que la paroi de l'élément de liaison se plie, par exemple vers l'extérieur de l'élément de liaison 50.

La zone 66 de faiblesse mécanique programmée comporte une pré-pliure, une fente ou une réduction d'épaisseur.

### L'élément de liaison 50

L'élément de liaison 50, entre la poutre de choc 30 et le longeron 20, forme un système de guidage non continument lié à l'élément absorbeur 40 (tube composite sur les figures). Une de ses fonctions est de guider l'élément absorbeur 40 durant sa compression en cas de choc, sans toutefois contribuer à absorber de l'énergie. Il permet une liaison après choc entre le barreau de la poutre de choc 30 et le longeron 20 du véhicule. Il a la capacité de se déformer, notamment grâce à la zone 66 de faiblesse mécanique programmée, et de ne pas générer de résidu incompressible après compression totale.

L'élément de liaison 50 a ainsi avantageusement un taux d'incompressibilité de moins de 5% après un choc.

L'invention concerne également un ensemble d'une poutre de choc 30, d'un longeron 20 et d'au moins un système d'absorption de choc 10 selon l'invention.

Le système d'absorption de choc 10 est fixé à la poutre de choc 30 par une platine de fixation 70, et au longeron 20 par une platine de fixation 80.

Les platines 70 et 80 comportent des renfoncements 75 et 85, ou logements, permettant d'accueillir, par exemple par emboîtement, le tube formant l'élément absorbeur 40.

De façon à ne pas générer d'incompressible entre les deux platines 70 et 80, l'emmanchement des tubes (élément absorbeur 40) dans les platines 70 et 80, se fait hors zone de compression (voir figures 1A et 1B). En effet, lors d'une compression suite à un choc, une face de la platine 70 peut venir en contact avec une face de la platine 80. Comme l'illustrent les figures 1A et 1B, toute la partie de l'élément absorbeur 40 comprise entre ces deux faces sera délaminée.

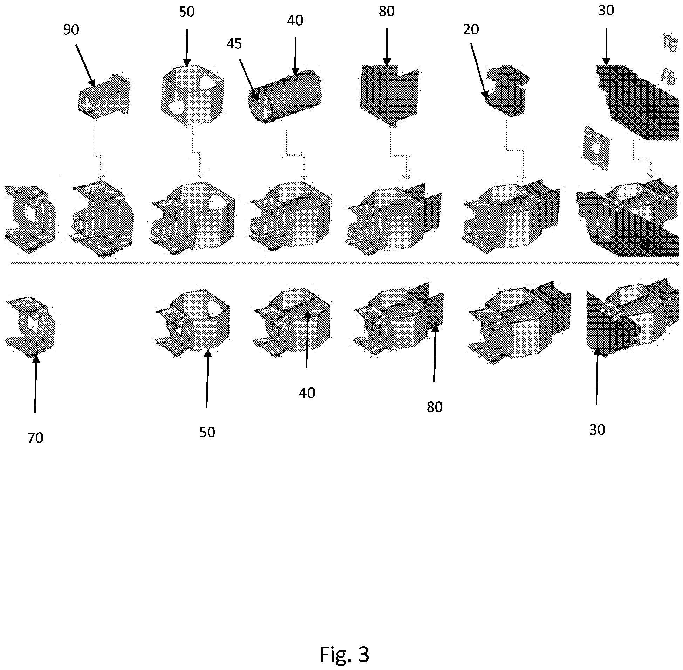

L'invention concerne également un procédé d'assemblage d'un tel ensemble comprenant les étapes suivantes (figure 3) :
- monter sur l'élément de liaison 50 la platine de fixation 70 du système d'absorption 10 de choc sur la poutre 30 ;
- disposer l'élément absorbeur 40 à l'intérieur de l'élément de liaison 50 ;
- monter sur l'élément de liaison 50 la platine de fixation 80 du système d'absorption 10 de choc sur le longeron 20 ;
- fixer le longeron 20 sur le système d'absorption 10 de choc ; et
- fixer le système d'absorption 10 de choc sur la poutre 30.

Sur la figure 3, est également représentée une étape de fixation d'un système de remorquage 90.

L'invention concerne également une poutre de choc 30, comportant au moins un système d'absorption de choc 10 selon l'invention.

L'invention concerne également un module avant de véhicule automobile comportant au moins un système d'absorption de choc 10 selon l'invention.

L'invention concerne également un véhicule automobile, comportant au moins un système d'absorption de choc 10 selon l'invention.

### Liste des références

- 10 :: système d'absorption de choc
- 20 :: longeron du véhicule automobile
- 30 :: poutre de choc transversale du véhicule automobile
- 40 :: élément absorbeur du système d'absorption de choc 10
- 45 :: nervures internes de l'élément absorbeur 40
- 50 :: élément de liaison, du système d'absorption de choc 10, entre la poutre de choc 30 et le longeron 20
- 60 :: paroi de l'élément de liaison 50
- 66 :: zone de faiblesse mécanique programmée de la paroi 60
- 70 :: platine de fixation du système d'absorption de choc 10 à la poutre de choc 30
- 75 :: renfoncements de la platine de fixation 70
- 80 :: platine de fixation du système d'absorption de choc 10 au longeron 20
- 85 :: renfoncements de la platine de fixation 80
- 90 :: système de remorquage

## Revendications

1. Système d'absorption (10) de choc pour véhicule automobile, destiné à être intercalé entre un longeron (20) et une poutre de choc transversale (30), comprenant :
- un élément absorbeur (40) apte à se désintégrer de manière irréversible au moins partiellement en réaction à un choc ;
- un élément de liaison (50) comprenant au moins une paroi (60) ayant une extrémité destinée à être fixée à la poutre de choc (30), et une autre extrémité destinée à être fixée au longeron (20), la paroi (60) comportant une zone (66) de faiblesse mécanique programmée permettant à la paroi (60) de se plier en cas de choc,
dans lequel l'élément absorbeur (40) comprend au moins une couche de matériau composite ayant une matrice en matière plastique et des éléments de renfort, **caractérisé en ce que** les éléments de renforts sont des fibres unidirectionnelles orientées dans une direction non parallèle à une direction longitudinale du véhicule.

2. Système d'absorption (10) de choc selon la revendication précédente, dans lequel l'élément absorbeur est apte à se désintégrer par délaminage.

3. Système d'absorption (10) de choc selon l'une des revendications précédentes, dans lequel l'élément absorbeur (40) comporte à son extrémité destinée à être positionnée du côté de la poutre (30), une amorce qui initie un mode de délaminage en compression de l'élément absorbeur (40) dans le sens du choc.

4. Système d'absorption (10) de choc selon l'une des revendications précédentes, dans lequel l'élément absorbeur (40) a la capacité de se délaminer sur toute sa longueur.

5. Système d'absorption (10) de choc selon l'une des revendications précédentes, dans lequel l'élément absorbeur (40) est positionné à l'intérieur de l'élément de liaison (50).

6. Système d'absorption (10) de choc selon l'une des revendications précédentes, dans lequel la zone (66) de faiblesse mécanique programmée comporte une pré-pliure, une fente ou une réduction d'épaisseur.

7. Système d'absorption (10) de choc selon l'une des revendications précédentes, dans lequel l'élément absorbeur (40) est un corps creux, de préférence un tube ayant une section choisie parmi la liste suivante : circulaire, rectangulaire, conique, hexagonale, évolutive.

8. Système d'absorption (10) de choc selon l'une des revendications précédentes, dans lequel l'élément absorbeur (40) n'est pas constitué d'un assemblage de différentes pièces.

9. Système d'absorption (10) de choc selon l'une des revendications précédentes, dans lequel la matrice est un matériau thermoplastique, de préférence choisi parmi les matériaux suivants : un polyamide, un polypropylène, un polyuréthane.

10. Système d'absorption (10) de choc selon l'une des revendications précédentes, dans lequel la matrice est un matériau thermodurcissable, de préférence choisi parmi les matériaux suivants : un époxy, un polyester, un vinylester.

11. Système d'absorption (10) de choc selon l'une des revendications précédentes, dans lequel les éléments de renfort sont des fibres continues, de préférence à base d'un matériau choisi seul ou en combinaison parmi les matériaux suivants : carbone, verre, aramide.

12. Système d'absorption (10) de choc selon l'une des revendications précédentes, dans lequel l'élément de liaison (50) a un taux d'incompressibilité de moins de 5% après un choc.

13. Ensemble d'une poutre (30), d'un longeron (20) et d'un système d'absorption (10) de choc selon l'une quelconque des revendications précédentes, **caractérisé en ce que** le système d'absorption (10) de choc est fixé respectivement à la poutre (30) et au longeron (20) par des platines de fixation (70, 80).

14. Ensemble selon la revendication précédente, dans lequel le système d'absorption (10) de choc est emmanché dans les platines (70, 80) hors zone de compression, de façon à ne pas générer d'incompressible entre les deux platines (70 et 80).

15. Poutre de choc (30), **caractérisée en ce qu'**elle comporte au moins un système d'absorption (10) de choc selon l'une des revendications 1 à 12.

16. Module avant de véhicule automobile, **caractérisé en ce qu'**il comporte au moins un système d'absorption (10) de choc selon l'une des revendications 1 à 12.

17. Véhicule automobile, **caractérisé en ce qu'**il comporte au moins un système d'absorption (10) de choc selon l'une des revendications 1 à 12.

18. Procédé d'assemblage d'un ensemble selon l'une des revendications 13 et 14, **caractérisé en ce qu'**il comprend les étapes suivantes :
- monter sur l'élément de liaison (50) la platine de fixation (70) du système d'absorption (10) de choc sur la poutre (30) ;
- disposer l'élément absorbeur (40) à l'intérieur de l'élément de liaison (50) ;
- monter sur l'élément de liaison (50) la platine de fixation (80) du système d'absorption (10) de choc sur le longeron (20) ;
- fixer le longeron (20) sur le système d'absorption (10) de choc ; et
- fixer le système d'absorption (10) de choc sur la poutre (30).

## Patentansprüche

1. Stoßdämpfungssystem (10) für ein Kraftfahrzeug, das dazu bestimmt ist, zwischen einem Längsträger (20) und einem Stoßquerträger (30) eingefügt zu werden, umfassend:
- ein Dämpfungselement (40), das in der Lage ist, sich als Reaktion auf einen Stoß zumindest teilweise irreversibel aufzulösen;
- ein Verbindungselement (50), das mindestens eine Wand (60) aufweist, deren eines Ende dazu bestimmt ist, mit dem Stoßträger (30) verbunden zu werden, und deren anderes Ende dazu bestimmt ist, mit dem Längsträger (20) verbunden zu werden, wobei die Wand (60) eine Zone (66) programmierter mechanischer Schwäche aufweist, die es der Wand (60) ermöglicht, sich im Falle eines Stoßs zu biegen, wobei das Dämpfungselement (40) mindestens eine Schicht aus Verbundmaterial mit einer Kunststoffmatrix und Verstärkungselementen aufweist, **dadurch gekennzeichnet, dass** die Verstärkungselemente unidirektionale Fasern sind, die in einer Richtung orientiert sind, die nicht parallel zu einer Längsrichtung des Fahrzeugs verläuft.

2. Stoßdämpfungssystem (10) nach dem vorhergehenden Anspruch, wobei das dämpfende Element in der Lage ist, sich durch Delaminierung aufzulösen.

3. Stoßdämpfungssystem (10) nach einem der vorhergehenden Ansprüche, wobei das Dämpfungselement (40) an seinem Ende, das auf der Seite des Trägers (30) zu positionieren ist, eine Grundierung aufweist, die einen Modus der Druckaufspaltung des Dämpfungselements (40) in der Stoßrichtung einleitet.

4. Stoßdämpfungssystem (10) nach einem der vorhergehenden Ansprüche, wobei das Dämpfungselement (40) die Fähigkeit hat, sich über seine gesamte Länge zu delaminieren.

5. Stoßdämpfungssystem (10) nach einem der vorhergehenden Ansprüche, wobei das Dämpfungselement (40) innerhalb des Verbindungselements (50) angeordnet ist.

6. Stoßdämpfungssystem (10) nach einem der vorhergehenden Ansprüche, wobei der Bereich (66) der programmierten mechanischen Schwäche eine Vorbiegung, einen Schlitz oder eine Dickenreduzierung aufweist.

7. Stoßdämpfungssystem (10) nach einem der vorhergehenden Ansprüche, wobei das Dämpfungselement (40) ein Hohlkörper ist, vorzugsweise ein Rohr mit einem Querschnitt, der aus der folgenden Liste ausgewählt ist: kreisförmig, rechteckig, konisch, sechseckig, skalierbar.

8. Ein Stoßdämpfungssystem (10) nach einem der vorhergehenden Ansprüche, wobei das Dämpfungselement (40) nicht aus einer Anordnung verschiedener Teile besteht.

9. Stoßdämpfungssystem (10) nach einem der vorhergehenden Ansprüche, wobei die Matrix ein thermoplastisches Material ist, das vorzugsweise aus den folgenden Materialien ausgewählt ist: einem Polyamid, einem Polypropylen, einem Polyurethan.

10. Stoßdämpfungssystem (10) nach einem der vorhergehenden Ansprüche, wobei die Matrix ein wärmehärtbares Material ist, das vorzugsweise aus den folgenden Materialien ausgewählt ist: einem Epoxid, einem Polyester, einem Vinylester.

11. Stoßdämpfungssystem (10) nach einem der vorhergehenden Ansprüche, wobei die Verstärkungselemente Endlosfasern sind, vorzugsweise auf der Basis eines Materials, das allein oder in Kombination aus den folgenden Materialien ausgewählt ist: Kohlenstoff, Glas, Aramid.

12. Stoßdämpfungssystem (10) gemäß einem der vorhergehenden Ansprüche, wobei das Verbindungselement (50) nach einem Stoß eine Inkompressibilitätsrate von weniger als 5% aufweist.

13. Anordnung aus einem Träger (30), einem Längsträger (20) und einem Stoßdämpfungssystem (10) nach einem der vorhergehenden Ansprüche, **dadurch gekennzeichnet, dass** das Stoßdämpfungssystem (10) an dem Träger (30) bzw. an dem Längsträger (20) durch Befestigungsplatten (70, 80) befestigt ist.

14. Eine Baugruppe nach dem vorhergehenden Anspruch, bei der das Stoßdämpfungssystem (10) in die Platten (70, 80) außerhalb der Kompressionszone eingebaut ist, um keine Inkompressibilität zwischen den beiden Platten (70 und 80) zu erzeugen.

15. Stoßträger (30), **dadurch gekennzeichnet, dass** er mindestens ein Stoßdämpfungssystem (10) nach einem der Ansprüche 1 bis 12 aufweist.

16. Frontmodul für ein Kraftfahrzeug, **dadurch gekennzeichnet, dass** es mindestens ein Stoßdämpfungssystem (10) nach einem der Ansprüche 1 bis 12 aufweist.

17. Kraftfahrzeug, **dadurch gekennzeichnet, dass** es mindestens ein Stoßdämpfungssystem (10) nach einem der Ansprüche 1 bis 12 aufweist.

18. Verfahren zum Zusammenbau einer Baugruppe nach einem der Ansprüche 13 und 14, **dadurch gekennzeichnet, dass** es die folgenden Schritte aufweist:
- Anbringen der Befestigungsplatte (70) des Stoßdämpfungssystems (10) auf dem Träger (30) am Verbindungselement (50);
- Anordnen des Dämpfungselements (40) im Inneren des Verbindungselements (50) ;
- Montage der Befestigungsplatte (80) des Stoßdämpfungssystems (10) auf dem Längsträger (20) an dem Verbindungselement (50);
- Befestigung des Längsträgers (20) an dem Stoßdämpfungssystem (10); und
- Befestigung des Stoßdämpfungssystems (10) an dem Träger (30).

## Claims

1. Impact absorbing system (10) for motor vehicle, intended to be interposed between a longitudinal beam (20) and a transverse impact beam (30), comprising:
- an absorbing element (40) that is able to irreversibly disintegrate at least partially in reaction to an impact;
- a connecting element (50) comprising at least one wall (60) having an end intended to be secured to the impact beam (30) and another end intended to be secured to the longitudinal beam (20), the wall (60) having a programmed zone of mechanical weakness (66) that allows the wall (60) to fold in the event of an impact,
wherein the absorbing element (40) comprises at least one layer of composite material having a plastic matrix and reinforcement elements, **characterised in that** the reinforcement elements are unidirectional fibres oriented in a direction not parallel to a longitudinal direction of the vehicle.

2. Impact absorbing system (10) according to the preceding claim, wherein the absorbing element is able to disintegrate by delamination.

3. Impact absorbing system (10) according to one of the preceding claims, wherein the absorbing element (40) comprises, at its end intended to be positioned on the side of the beam (30), an initiator which initiates delamination by compression of the absorbing element (40) in the direction of the impact.

4. Impact absorbing system (10) according to one of the preceding claims, wherein the absorbing element (40) is able to delaminate over its entire length.

5. Impact absorbing system (10) according to one of the preceding claims, wherein the absorbing element (40) is positioned inside the connecting element (50).

6. Impact absorbing system (10) according to one of the preceding claims, wherein the programmed zone of mechanical weakness (66) comprises a pre-fold, a slit or a thickness reduction.

7. Impact absorbing system (10) according to one of the preceding claims, wherein the absorbing element (40) is a hollow body, preferably a tube having a cross-section selected from the following list: circular, rectangular, conical, hexagonal, scalable.

8. Impact absorbing system (10) according to one of the preceding claims, wherein the absorbing element (40) does not consist of an assembly of different parts.

9. Impact absorbing system (10) according to one of the preceding claim, wherein the matrix is a thermoplastic material, preferably selected from the following materials: polyamide, polypropylene, polyurethane.

10. Impact absorbing system (10) according to one of the preceding claims, wherein the matrix is a thermosetting material, preferably selected from the following materials: epoxy, polyester, vinyl ester.

11. Impact absorbing system (10) according to one of the preceding claims, wherein the reinforcement elements are continuous fibres, preferably based on a material selected alone or in combination from the following materials: carbon, glass, aramid.

12. Impact absorbing system (10) according to one of the preceding claims, wherein the connecting element (50) has an incompressibility rate of less than 5 % after an impact.

13. Assembly of a beam (30), a longitudinal beam (20) and an impact absorbing system (10) according to any one of the preceding claims, **characterised in that** the impact absorbing system (10) is secured respectively to the beam (30) and to the longitudinal beam (20) by attachment plates (70, 80).

14. Assembly according to the preceding claim, wherein the impact absorbing system (10) is inserted in the plates (70, 80) outside the compression area, so as not to generate an incompressible residue between the two plates (70 and 80).

15. Impact beam (30), **characterised in that** it comprises at least one impact absorbing system (10) according to one of claims 1 to 12.

16. Motor vehicle front module, **characterised in that** it comprises at least one impact absorbing system (10) according to one of claims 1 to 12.

17. Motor vehicle, **characterised in that** it comprises at least one impact absorbing system (10) according to one of claims 1 to 12.

18. Method for assembling an assembly according to claim 13 or 14, **characterised in that** it comprises the following steps:
- mounting on the connecting element (50) the attachment plate (70) for securing the impact absorbing system (10) to the beam (30);
- arranging the absorbing element (40) inside the connecting element (50);
- mounting on the connecting element (50) the attachment plate (80) for securing the impact absorbing system (10) to the longitudinal beam (20);
- securing the longitudinal beam (20) to the impact absorbing system (10); and
- securing the impact absorbing system (10) to the beam (30).
